# EUROPÄISCHE PATENTSCHRIFT

(11) **EP 0 935 511 B1**
(45) Veröffentlichungstag und Bekanntmachung des Hinweises auf die Patenterteilung: **18.09.2002**
(21) Anmeldenummer: 98945072.1
(22) Anmeldetag: 27.07.1998
(51) Int. Cl.: B23Q 1/25

(54) **LAGERUNG FÜR EIN MIT LINEARMOTOREN BEIDSEITIG ANGETRIEBENES WERKZEUGMASCHINEN-PORTAL**
SUPPORT FOR A MACHINE TOOL PORTAL DRIVEN BY LINEAR MOTORS ON BOTH SIDES
SUPPORT POUR PORTIQUE DE MACHINE-OUTIL ENTRAINE DES DEUX COTES PAR DES MOTEURS LINEAIRES

(30) Priorität: 28.08.1997 DE 19737478
(43) Veröffentlichungstag der Anmeldung: 18.08.1999
(73) Patentinhaber: TRUMPF Sachsen GmbH, 01904 Neukirch (DE)
(72) Erfinder: HERRMANN, Rolf, D-02689 Sohland (DE); THONIG, Harry, D-01904 Neukirch (DE); WALDEN, Matthias, D-02689 Sohland (DE)
(86) Internationale Anmeldenummer: DE9802174
(87) Internationale Veröffentlichungsnummer: WO99011423

(56) Entgegenhaltungen:
- DE-A1- 3 245 124
- DE-A1- 4 307 482
- DE-B1- 2 412 769
- DE-B2- 2 916 280

## Beschreibung

Die Erfindung betrifft eine Lagerung für ein mit Linearmotoren beidseitig angetriebenes Werkzeugmaschinen-Portal gemäß dem Oberbegriff des Patentanspruchs 1.

Es ist bereits eine gattungsgemäße Werkzeugmaschine mit auf Schienen geführten, beidseitig an ihren Enden mit Linearmotoren angetriebenen Schlitten bekannt (DE 4307482 A 1), die als Werkstückträger und als Werkzeugträger Relativbewegungen zueinander ausführend zusammen wirken. Jeder Schlitten wird auf einem parallel liegenden Paar Hauptschienen geführt. 90° seitlich gegen die Schienen gedreht sind beidseitig am Schlittenträger die Linearmotoren angebracht, die einseitig am Schlitten und anderseitig mit einer Zusatzführung gelagert sind. Eine Kompensation von Spannungen und Drehmomenten im Schlitten ist nicht vorgesehen.

Aus der DE-AS 24 12 769 "Säulen-Führung für die Preßplatte einer Presse" ist es bekannt, ein geringes Lagerspiel durch die Führung der Preßplatte mit Lagerpaaren an abgeflachten Flächen an den Säulen dadurch zu erreichen, daß die Lagerpaare nur zwei nebeneinanderliegenden Säulen zugeordnet sind und einer weiteren Säule nur ein einzelnes Lager zugeordnet ist, so daß von den sechs Freiheitsgraden der als starren Körper gedachten Preßplatte fünf geführt werden. Durch diese Reduzierung der führenden Lager von acht auf fünf wird die kinetische Überbestimmung aufgehoben und eine von Spannungen und schädlichen Drehmomenten unabhängige Führung erreicht. Zum Schutz von auf Schienen laufenden Linearmotoren vor Spannungen oder schädlichen Drehmomenten in einem Werkzeugmaschinen-Portal sowie vor Havarieschäden für das Werkzeugmaschinen-Portal erscheint eine Anwendung nur bedingt möglich.

Aufgabe der Erfindung ist es von daher, eine Lagerung für ein mit Linearmotoren beidseitig angetriebenes Werkzeugmaschinen-Portal zu finden, bei dem die Linearmotoren auf fest angebrachten Schienen laufen und Spannungen und Drehmomente im Werkzeugmaschinen-Portal kompensiert werden.

Erfindungsgemäß wird diese Aufgabe mit den im ersten Anspruch genannten Merkmalen gelöst. Vorteilhafte Ausführungen der Erfindung sind Gegenstand der Unteransprüche. Gegenstand der Erfindung ist eine Lagerung für ein mit Linearmotoren beidseitig und gleichsinnig angetriebenes Werkzeugmaschinen-Portal. Die Linearmotoren sind auf fest gelagerten, parallel zueinander laufenden Schienen geführt. Die Linearmotoren tragen Reibflächen, auf denen eine Maschinenportalbrücke durch Eigengewicht und Federkraft angedrückt, durch seitliche, die Reibungskraft überwindende Seitenkräfte verschiebbar und auf den Reibflächen drehbar, aufliegt. Dazu durchstoßen um sich drehbare Bolzen in in Längsrichtung der Maschinenportalbrücke ausgerichteten Langlöchern die Auflageflächen der Maschinenportalbrücke. Zur Führung der Maschinenportalbrücke kann die eine Auflagefläche von einem Bolzen in einer Führung durchstoßen sein, während die andere Auflagefläche weiterhin ein Langloch besitzt. Die Federkraft kann durch gesonderte Einstellschrauben eingestellt sein, wobei die Einstellschrauben in die Reibfläche eingeschraubt, die Einstellschrauben von einem Freiraum in den Auflageflächen der Maschinenportalbrücke umgeben und die Federn zwischen dem Kopf der Einstellschrauben und den Auflageflächen der Maschinenportalbrücke gespannt sind.

Bei Spannungen in der Maschinenprotalbrücke oder bei Abweichungen der Schienen vom parallelen Lauf können die dabei erzeugten Seitenkräfte durch Bewegen der Auflageflächen auf den Reibflächen in den Langlöchern geführt ausgeglichen werden. Havarien, insbesondere durch ungleiches oder gar gegensinniges Anlaufen der Linearmotoren werden durch Drehen der Auflageflächen auf den Reibflächen um die Bolzen vermieden. Die Arbeitsstellung der Maschinenportalbrücke kann nach einer Havarie durch Steuerung eines Linearmotors wieder erreicht werden.

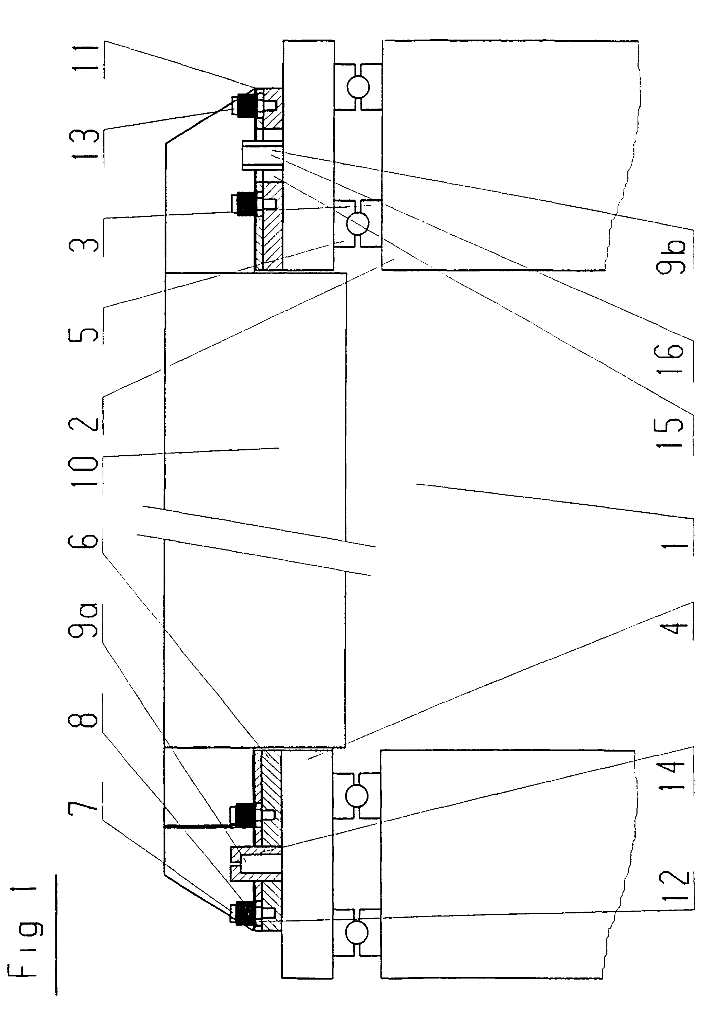

Die Erfindung soll nachstehend an Hand eines Ausführungsbeispiels näher erläutert werden. Die zugehörige Zeichnung zeigt in
Fig. 1 das Maschinenportal in Seitenansicht

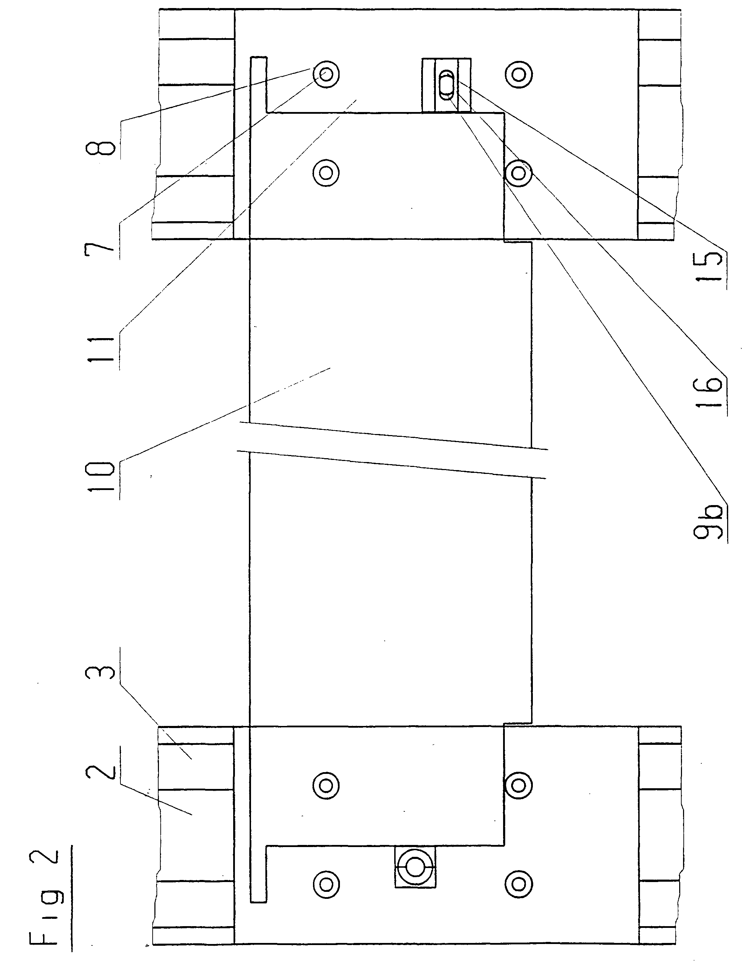

Fig. 2 die Draufsicht auf eine Lagerstelle

Ein Maschinenportal 1 ist auf einem Maschinenbett 2 gelagert. Das Maschinenbett 2 trägt parallel zueinander laufende Schienenpaare 3, auf denen je ein Linearmotor 4 mit Führungen 5 gelagert ist. Jeder Linearmotor 4 trägt eine Reibplatte 6, in der Einstellschrauben 7 für Federn 8 und um sich drehbare Bolzen 9a und 9b gelagert sind. Auf den Reibplatten 6 liegt eine Maschinenportalbrücke 10 mit Auflageplatten 11 auf. Um jede Einstellschraube 7 befindet sich in der Auflageplatte 11 ein Freiraum 12. Die Federn 8 sind zwischen dem Schraubenkopf 13 der Einstellschrauben und der Oberseite der Auflageplatten 11 eingespannt. Der drehbare Bolzen 9a durchstößt die Auflageplatte 11 in einer anliegenden Führung 14. Der drehbare Bolzen 9b durchstößt die zugehörige Aufiageplatte 11 in einem sich in Längsrichtung der Maschinenportalbrücke 10 erstreckenden Langloch 15. Der Bolzen 9b trägt Flankenflächen 16, mit denen er an den Längswandungen des Langlochs 15 anliegt.

Die Maschinenportalbrücke 10 wird durch ihr Gewicht und zusätzlich durch die eingestellte Federkraft der Federn 8 mit ihren Auflageplatten 11 gegen die Reibplatten 6 gedrückt. Sobald die von Spannungen in der Maschinenportalbrücke 10 oder durch Abweichungen der Schienenpaare vom parallelen Verlauf hervorgerufenen Kräfte die Reibkraft zwischen der Reibplatte 6 und der Auflageplatte 11 übersteigen, gleitet ausweichend der Bolzen 9b im Langloch 15. Bei einer Havarie oder bei ungleichmäßigem bzw. gar gegensinnigen Anlauf der Linearmotoren 4 kann die Maschinenportalbrücke um die Bolzen 9a und 9b gedreht schräg gestellt werden. Auch hier gleitet der Bolzen 9b im Langloch 15 die veränderte Länge ausgleichend. Durch die die Einstellschrauben 7 umgebenden Freiräume 12 ist die Bewegung der Maschinenportalbrücke 10 möglich. Nach Beseitigen der Ursache der Havarie wird durch Steuerung nur eines Linearmotors 4 die Maschinenportalbrücke 10 wieder in Arbeitsstellung gebracht, ohne daß die Linearmotoren 4 und deren Lagerung oder die Maschinenportalbrücke 10 Schaden genommen haben.

## Patentansprüche

1. Lagerung für ein mit elektrischen Linearmotoren beidseitig angetriebenes Werkzeugmaschinen-Portal, wobei die mit der Portalbrücke verbundenen Primärteile der Linearmotoren auf fest gelagerten, parallel zueinander laufenden Schienen geführt sind, **dadurch gekennzeichnet, daß**
- zwischen Portalbrücke (10) und Primärteilen (4) je eine Reibplatte (6) angeordnet ist, auf welche die Portalbrücke (10) mit definierter Federkraft angedrückt wird und
- die Portalbrücke (10) mittels Löchern (14, 15) in je einem primärseitigen, drehbaren Bolzen (9a, 9b) gelagert ist , wobei wenigstens ein Loch als in Längsrichtung der Portalbrücke (10) ausgerichtetes Langloch (15) ausgebildet ist.

2. Lagerung für ein Werkzeugmaschinen-Portal nach Anspruch 1, **dadurch gekennzeichnet, daß** die Bolzen (96) in den Langlöchern (15) Seitenflächen (16) haben, mit denen sie an den Längswänden der Langlöcher (15) anliegen.

3. Lagerung für ein Werkzeugmaschinen-Portal nach Anspruch 1, **dadurch gekennzeichnet, daß** die andrückende Federkraft mit von den drehbaren Bolzen (9a, 9b) unabhängigen Einstellschrauben (7) einstellbar ist.

## Claims

1. Bearing for a machine tool carriage driven with electric linear motors on both sides, whereby the primary parts of the linear motors connected with the carriage bridge are guided on fixed rails running parallel to one another, wherein
(a) one friction plate (6) each is located between carriage bridge (10) and primary parts (4), onto which the carriage bridge (10) is pressed with definite spring force; and
(b) the carriage bridge (10) is mounted by means of bolts (9a, 9b) capable of turning on the primary side in holes (14, 15), whereby at least one hold is made as a longitudinal hole directed in the longitudinal directions of the carriage bridge (10).

2. Bearing for a machine tool carriage in accordance with Claim 1 wherein the bolts (b) in the longitudinal holes (15) have side surfaces (16) with which they abut the longitudinal walls of the longitudinal holes (15).

3. Bearing for a machine tool carriage in accordance with Claim 1 wherein the pressing spring force is adjustable with adjusting screws (7) independent of the turnable bolts (9a, 9b).

## Revendications

1. Disposition pour un portique de machine-outil entraîné de part et d'autre par moteur électrique linéaire, où les parties primaires des moteurs linéaires reliées au pont de portique sont guidées sur des rails disposés parallèlement les uns par rapport aux autres et implantés à demeure **caractérisés par le fait que**
- entre le pont de portique (10) et les parties primaires (4) se trouve disposée respectivement une plaque de friction (6) sur laquelle le pont de portique (10) est appliqué avec une force de ressort définie et que
- le pont de portique (10 est rendu solidaire moyennant des alésages (14,15) dans respectivement un axe orientable côté primaire, où au moins un alésage a la forme d'un alésage oblong (15) orienté dans la direction longitudinale du pont portique (10).

2. Disposition pour un portique de machine-outil selon la demande de brevet 1 **caractérisé par le fait que** les axes (9b) dans les alésages oblongs (15) présentent des surfaces latérales (16) avec lesquelles ils appliquent contre les parois longitudinales des alésages oblongs (15).

3. Disposition pour un portique de machine-outil selon la demande de brevet 1 **caractérisé par le fait que** la force de ressort développée pour l'application est réglable à l'aide de vis de réglage (7) indépendantes des axes orientables (9a, 9b).
